# EUROPÄISCHE PATENTSCHRIFT

(11) **EP 0 806 280 B1**
(45) Veröffentlichungstag und Bekanntmachung des Hinweises auf die Patenterteilung: **11.07.2001**
(21) Anmeldenummer: 97890072.8
(22) Anmeldetag: 18.04.1997
(51) Int. Cl.: B29C 47/10, B29B 17/00

(54) **Vorrichtung und Anlage zur Aufbereitung von Kunststoffgut**
Apparatus and plant for processing plastics
Dispositif et installation pour la préparation des matières plastiques

(30) Priorität: 06.05.1996 AT 80696
(43) Veröffentlichungstag der Anmeldung: 12.11.1997
(73) Patentinhaber: STARLINGER & CO. GESELLSCHAFT MBH, 1060 Wien (AT)
(72) Erfinder: Starlinger Huemer, Franz, 1060 Wien (AT)
(74) Vertreter: Collin, Hans, Dipl.-Ing. Dr.

(56) Entgegenhaltungen:
- DD-A- 227 648
- DE-B- 1 142 840
- SU-A- 725 891
- US-A- 3 563 514

## Beschreibung

Die Erfindung betrifft eine Vorrichtung zur Aufbereitung von, insbesondere thermoplastischem, Kunststoffgut, bestehend aus einem Behälter mit einer Beschickungsöffnung zur Zuführung von Kunststoffgut und einer Austragsöffnung für aufbereitetes Kunststoffgut zum Anschluß an einen nachgeschalteten Extruder mit stirn- oder mantelseitiger Füllöffnung.

Vorrichtungen zum Aufbereiten von Kunststoffgut, das als Abfall aus der Kunststoffverarbeitung anfällt, sind bekannt. Die Schwierigkeiten bei der Aufbereitung dieser Kunststoffabfälle liegen unter anderem darin, daß die Packungsdichte, die Qualität und die Materialzusammensetzung des Kunststoffgutes in weiten Bereichen variieren kann, wodurch die gleichmäßige Verdichtung und Weiterverarbeitung bzw. der Weitertransport zu einem Extruder oder dergl. erschwert wird.

Bei einer bekannten Vorrichtung zur Aufbereitung von Kunststoffgut werden die zu verarbeitenden Kunststoffteile von oben in einen Aufnahmebehälter geworfen, in dem sich ein Zerkleinerungsorgan dreht und gleichzeitig Waschflüssigkeit zugeführt wird. Nach Beendigung des Waschvorgangs und Ablauf der Waschflüssigkeit unter Zurückhaltung der Kunststoffteile im Behälter dreht sich das Zerkleinerungsorgan weiter, bis eine Verdichtung und Agglomeration der Kunststoffteile erfolgt. Danach wird das verfestigte Agglomerat über einen in Bodennähe vorgesehenen Auslaßstutzen ausgetragen. Nachteilig bei dieser Vorrichtung ist das komplizierte und bedienungsaufwendige Verfahren sowie die diskontinuierliche Arbeitsweise, die keinen zufriedenstellenden Materialdurchsatz zuläßt. Darüber hinaus nimmt auch die Verdichtung beträchtliche Zeit in Anspruch.

Ferner ist bekannt, Kunststoffgut in einer Mühle zu zerkleinern und in einen Silo zu fördern, aus dem dann das zerkleinerte Gut über ein Stopfwerk einem Extruder zugeführt wird. Hier ergibt sich ein hoher bautechnischer Aufwand und ein ungünstiger thermischer Wirkungsgrad, weil bei der Zerkleinerung in der Mühle entstehende Wärme ungenutzt bleibt.

Weiters sind Vorrichtungen zum Aufbereiten von Kunststoffgut bekannt, bestehend aus stehenden, von oben beschickbaren Aufnahmebehältern, in denen wenigstens ein in Bodennähe angeordnetes Zerkleinerungs- und Mischorgan, das mit Messern bestückt ist, um die Behälterachse rotiert, wobei der Aufnahmebehälter in Höhe des Zerkleinerungsorgans eine Mantelöffnung aufweist, die mit einem tangential zum Aufnahmebehälter angeordneten, unmittelbar an den Behälter angeschlossenen Schneckenextruder in Verbindung steht. Alternativ zum tangentialen Anschluß des Schneckenextruders kann dieser auch radial oder sekantenförmig in den Aufnahmebehälter münden. Nachteilig bei den vorgenannten Ausführungsformen ist die mangelhafte Stopfwirkung des Zerkleinerungsorgans an den Extruder, die dazu führt, daß der Extruder zuwenig oder gar kein Kunststoffgut erhält und daher die Extruderschnecke leer durchläuft. Ein weiteres Problem dieser Vorrichtungen besteht darin, daß das zugeführte Kunststoffgut aufgrund der Wärmeeinwirkung zur Brückenbildung neigt, das heißt, daß das Kunststoffgut außerhalb der Reichweite des Zerkleinerungsorgans agglomeriert und einen Tunnel bildet, in dem das Zerkleinerungsorgan im Leerlauf rotiert, ohne daß ihm weiteres Kunststoffgut zugeführt werden kann. Somit ist auch bei diesen Vorrichtungen nach dem Stand der Technik der Mengendurchsatz an aufbereitetem Kunststoff gering und eine oftmalige Wartung nötig. Die erwähnten großen Unterschiede in der Packungsdichte des Beschickungsmaterials erschweren zusätzlich den wirtschaftlichen Einsatz der bekannten Vorrichtung.

Weiterhin ist aus dem DE-A-1 142 840 eine Vorrichtung zur Aufbereitung von Kunststoffgut gemäß dem einleitenden Teil des Anspruchs 1 bekannt.

Der Erfindung liegt die Aufgabe zugrunde, eine verbesserte Vorrichtung zur Aufbereitung von, insbesondere thermoplastischem, Kunststoffgut bereitzustellen, bei der Abhilfe für die Nachteile des Standes der Technik geschaffen wird. Insbesondere stellt die vorliegende Erfindung eine Kunststoffaufbereitungsvorrichtung bereit, die eine Lösung des Problems der Brückenbildung des Kunststoffguts im Aufnahmebehälter bietet und die ausreichende Stopfwirkung und zufriedenstellende Materialzufuhr zu einem nachgeschalteten Extruder bietet, wobei auch unterschiedlichste Packungsdichten und Materialzusammensetzungen des Kunststoff-Beschickungsgutes verarbeitet werden können.

Die erfindungsgemäße Vorrichtung zur Aufbereitung von, insbesondere thermoplastischem, Kunststoffgut, bestehend aus einem Behälter mit einer Beschickungsöffnung zur Zuführung von Kunststoffgut und einer Austragsöffnung für aufbereitetes Kunststoffgut zum Anschluß an einen nachgeschalteten Extruder mit stirn- oder mantelseitiger Füllöffnung wobei im Behälter zumindest eine erste Schnecke mit einem Kern und darauf ausgebildeter Schneckenwendel wenigstens teilweise innerhalb mindestens einer zweiten, hohlen Schnecke angeordnet ist, deren Schneckenwendel an der Innenwand eines hohlen Schneckenkörpers ausgebildet ist, wobei beide Schnecken solcherart drehbar antreibbar sind, daß sie Kunststoffgut zur Austragsöffnung des Behälters fördern und wobei sich der Freiraum zwischen den beiden Schnecken zur Austragsöffnung des Behälters hin verringert.

Durch diese erfindungsgemäße Ineinander-Verschachtelung von innerer und äußerer Schnecke, die im folgenden auch als Stopfschnecken bezeichnet werden, wird die Brückenbildung des Kunststoffguts außerhalb der Schneckenreichweite durch ständiges In-Bewegung-halten unterbunden, wodurch eine ausreichende Verdichtung und regelmäßige Zufuhr des Materials zum nachgeschalteten Extruder gewährleistet ist.

In der Regel wird dabei eine innere Schnecke von einer äußeren Schnecke umgeben, doch gibt es auch Anwendungsfälle, bei denen mehrere, parallel oder in spitzem Winkel zueinander liegende, ineinandergreifende oder nicht ineinandergreifende Innenschnecken von einer äußeren Schnecke umgeben werden oder mehrere, hintereinander angeordnete, insbesondere mit unterschiedlichen Drehgeschwindigkeiten angetriebene Außenschnecken eine oder mehrere Innenschnecke umgeben. In bestimmten Fällen kann es auch zweckmäßig sein, um eine erste Außenschnecke herum eine zweite Außenschnecke anzuordnen, d.h. einen mehrschaligen Aufbau vorzusehen. Die Längen von Außen- und Innenschnecken müssen nicht gleich sein, sondern es kann die eine Schnecke einseitig oder zweiseitig über die andere Schnecke hinausragen.

Die Förderrichtung von Außen- und Innenschnecken erfolgt jeweils in Richtung zur Austragsöffnung des Behälters. Dies kann entweder dadurch erfolgen, daß die beiden Schnecken gleichsinnige Schneckengänge aufweisen und gleichsinnig drehbar sind oder aber dadurch, daß die beiden Schnecken gegensinnige Schneckengänge aufweisen und gegensinnig drehbar sind.

Im Gegensatz zu den Vorrichtungen nach dem Stand der Technik, bei denen stets ein stehender Aufnahmebehälter zum Einsatz kam, ist es erfindungsgemäß möglich, den Aufnahmebehälter in jeder Lage zwischen der Waagrechten und der Senkrechten anzuordnen, was wiederum zur Folge hat, daß die Förderrichtungen der beiden Schnecken in einem beliebigen Winkel zwischen der Waagrechten und der nach unten weisenden Lotrechten liegen können.

In Abhängigkeit der jeweiligen Anwendung und des verwendeten Beschickungsmaterials wird die erfindungsgemäße Aufbereitungsvorrichtung so ausgestaltet, daß die Drehachsen von Innen- und Außenschnecke entweder zusammenfallen oder miteinander einen spitzen Winkel bilden oder parallel und im Abstand zueinander verlaufen.

In einer die Herstellung der Vorrichtung vereinfachende Ausführungsform bildet ein drehbarer Teil des Behälters den Körper der äußeren Schnecke, wobei an dessen Innenwand die Schneckenwendel ausgebildet ist.

Zur Verbesserung der Stopfwirkung der erfindungsgemäßen Vorrichtung kann vorgesehen sein, daß zwischen dem erwähnten drehbaren Behälterteil und der Austragsöffnung ein starrer Behälterteil vorgesehen ist, an dessen Innenwand, vorzugsweise gewundene, Nuten ausgebildet sind. Die Nuten verhindern dabei, daß sich das kompaktierte Kunststoffgut mit den Stopfschnecken mitdreht, wodurch die Förderleistung verringert würde.

Die Wirkung dieser Nuten kann verstärkt werden, indem sie zur Austragsöffnung hin konisch zusammenlaufen und bzw. oder sich die Nuttiefe zur Austragsöffnung hin verringert.

Da das Kunststoffgut im Verlauf von der Beschickungsöffnung zur Austragsöffnung des Aufnahmebehälters hin kontinuierlich verdichtet wird, wobei oftmals eine Kompaktierung um den Faktor 30 und darüber verlangt wird, kann es zweckmäßig sein, daß die innere Schnecke zur Austragsöffnung hin kernprogressiv verläuft bzw. sich ihre Gangtiefe verringert und bzw. oder sich ihre Steigung verringert.

Demselben Zweck der Unterstützung der Kompaktierung dient eine Ausgestaltung der Erfindung, worin die Innenwand des Körpers der äußeren Schnecke zur Austragsöffnung hin konisch zusammenläuft und bzw. oder sich die Gangtiefe der äußeren Schnecke im Verlauf von der Beschickungsöffnung zur Austragsöffnung verändert. Die Gangtiefe kann sich dabei beispielsweise kontinuierlich erhöhen, bevorzugt wird jedoch eine Ausgestaltung, bei der sich die Gangtiefe der äußeren Schnecke im Verlauf von der Beschickungsöffnung zur Austragsöffnung zunächst erhöht und anschließend wieder verringert.

Aus der momentanen Stromaufnahme der Antriebsmotoren der äußeren und inneren Schnecken bzw. der Schnecke eines nachgeschalteten Extruders läßt sich detektieren, wieviel Kunststoffgut sich im Aufnahmebehälter befindet bzw. dem Extruder zugeführt wird, wobei zu beachten ist, daß ein Motor mehrere oder alle im Einsatz stehenden Schnecken antreiben kann. Dieser Wert der Stromaufnahme kann für eine Regelung der Materialzufuhr bzw. des Materialdurchsatzes verwendet werden. Erfindungsgemäß wird diese Regelung in einer ersten Ausgestaltung realisiert, indem die Drehgeschwindigkeit der äußeren und bzw. oder der inneren Schnecke in Abhängigkeit der Stromaufnahme des Motors einer nachgeschalteten Extruderschnecke regelbar ist, wobei eine erhöhte Stromaufnahme eine Verringerung der Drehgeschwindigkeit und vice versa zur Folge hat.

Alternativ dazu kann die Drehgeschwindigkeit der äußeren und bzw. oder der inneren Schnecke in Abhängigkeit der Stromaufnahme ihres jeweiligen Antriebsmotors geregelt werden, wobei eine erhöhte Stromaufnahme eine Verringerung der Drehgeschwindigkeit und vice versa zur Folge hat.

Bei wiederum einer anderen erfindungsgemäßen Ausgestaltung wird die Kunststoffgutzufuhrrate zur Beschickungsöffnung der Vorrichtung in Abhängigkeit der Stromaufnahme des Antriebsmotors der äußeren und bzw. oder der inneren Schnecke und bzw. oder einer nachgeschalteten Extruderschnecke geregelt, wobei eine erhöhte Stromaufnahme eine Verringerung der Zufuhrrate und vice versa zur Folge hat. Die Kunststoffgutzufuhrrate wird dabei durch Variieren der Geschwindigkeit einer motorgetriebenen Zuführvorrichtung, z.B. ein Förderband oder eine Förderschnecke, geregelt.

In einer besonders vorteilhaften Variante der Erfindung kann die Kunststoffgut-Aufbereitungsvorrichtung so mit einem nachgeschalteten Extruder verbunden werden, daß die innere Schnecke koaxial mit der Schnecke des nachgeschalteten Extruders gekoppelt ist. Dies ermöglicht einen vereinfachten Aufbau der Anlage, der noch weiter vereinfacht werden kann, wenn die innere Schnecke einstückig mit der Schnecke des nachgeschalteten Extruders ausgebildet ist.

Wird die innere Schnecke der erfindungsgemäßen Vorrichtung mit einer Extruderschnecke zusammengeschlossen, so erweist es sich als günstig, wenn die kombinierte Anordnung aus innerer Schnecke und Extruderschnecke zur Düsenöffnung des Extruders hin kernprogressiv verläuft bzw. sich ihre Gangtiefe verringert und bzw. oder sich ihre Steigung verringert.

Zur Verbesserung des Materialeinzugs eines der erfindungsgemäßen Vorrichtung nachgeschalteten Extruders kann vorgesehen sein, daß dieser im Einzugsbereich eine mit Nuten versehene Buchse aufweist, wobei weiters die Nuten in Förderrichtung konisch zusammenlaufen und bzw. oder sich ihre Tiefe verringern.

Die Erfindung umfaßt auch eine Anlage, bestehend aus einer erfindungsgemäßen Vorrichtung zur Aufbereitung von, insbesondere thermoplastischem, Kunststoffgut, die mit einem Doppelschneckenextruder mit gleichsinnig oder gegensinnig drehenden Extruderschnecken zusammengeschaltet ist. Dabei hängt die Wahl des Drehsinns vom verwendeten Kunststoffmaterial ab. In allgemeinen Anwendungsfällen wird die gegensinnige Drehrichtung bevorzugt. Gleichsinniger Drehsinn wird zur Verbesserung der Knet- und Durchmischeigenschaften bei bestimmten Kunststoffen bevorzugt.

Die Erfindung umfaßt weiters eine Anlage, bestehend aus mindestens zwei Vorrichtungen zur Aufbereitung von Kunststoffgut, die mit einem nachgeschalteten Extruder verbunden sind, wobei die Vorrichtungen zur Aufbereitung von Kunststoffgut im Einzugsbereich des Extruders um einen Teil des Schneckenumfangs angeordnet sind. Dies ermöglicht eine Beschickung von mehreren Seiten, wodurch die einzelnen Aufbereitungsvorrichtungen kleiner ausgeführt sein können.

Weiters umfaßt die Erfindung eine Anlage, bestehend aus mindestens zwei Vorrichtungen zur Aufbereitung von, insbesondere thermoplastischem, Kunststoffgut, die mit einem Extruder zusammengeschaltet sind, wobei die Vorrichtungen zur Aufbereitung von Kunststoffgut hintereinander in Förderrichtung der Extruderschnecke angeordnet sind. Auf diese Weise kann gewährleistet werden, daß der Extrudergang über seine gesamte Länge mit Kunststoffgut vollgestopft ist.

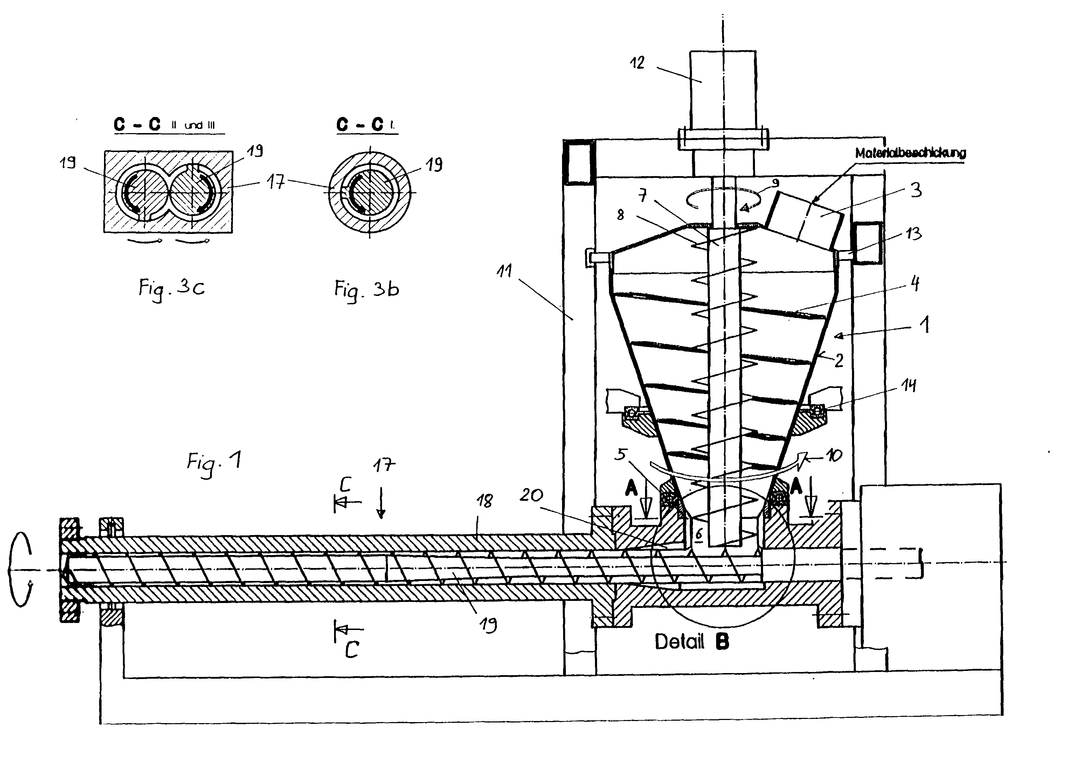

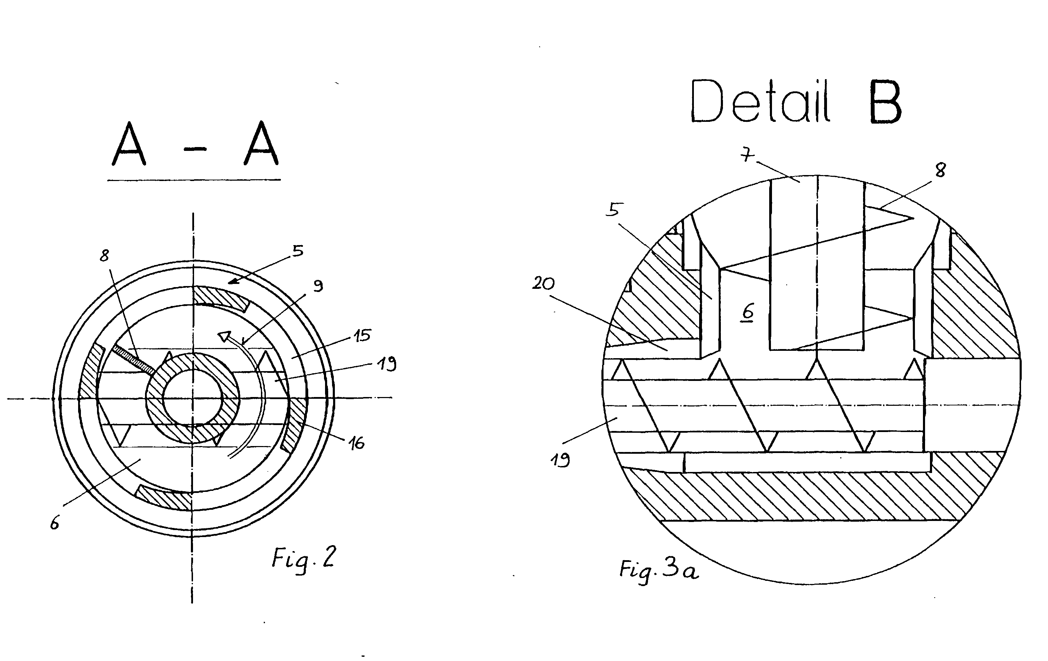

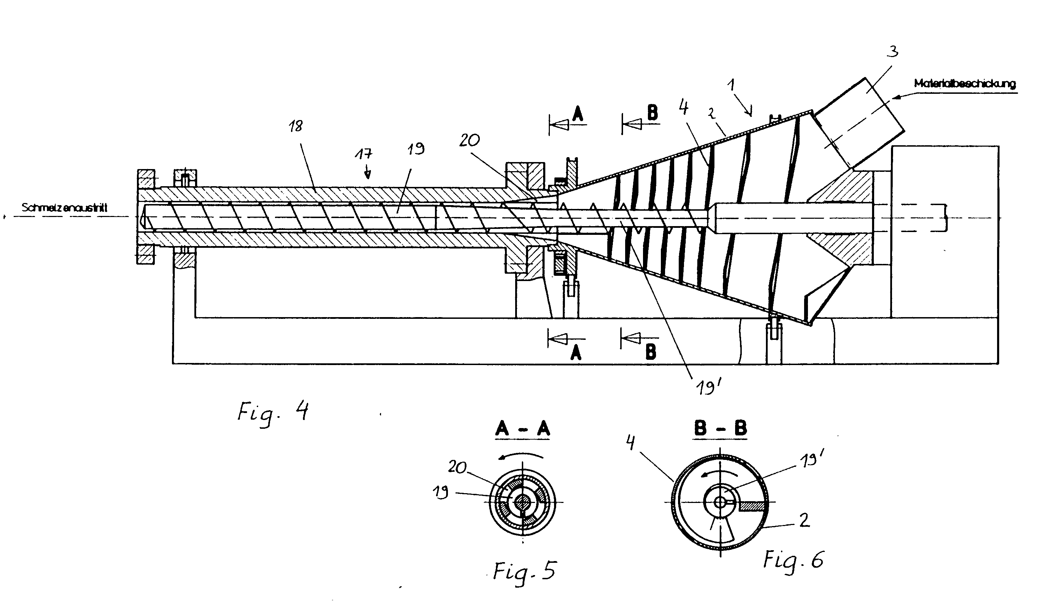

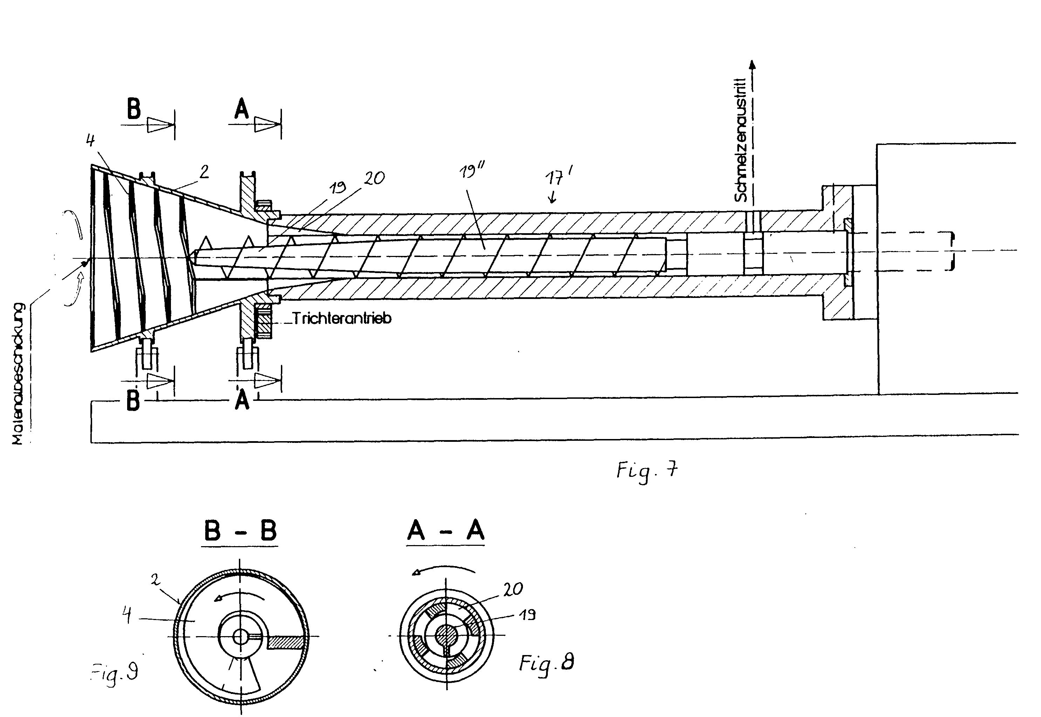

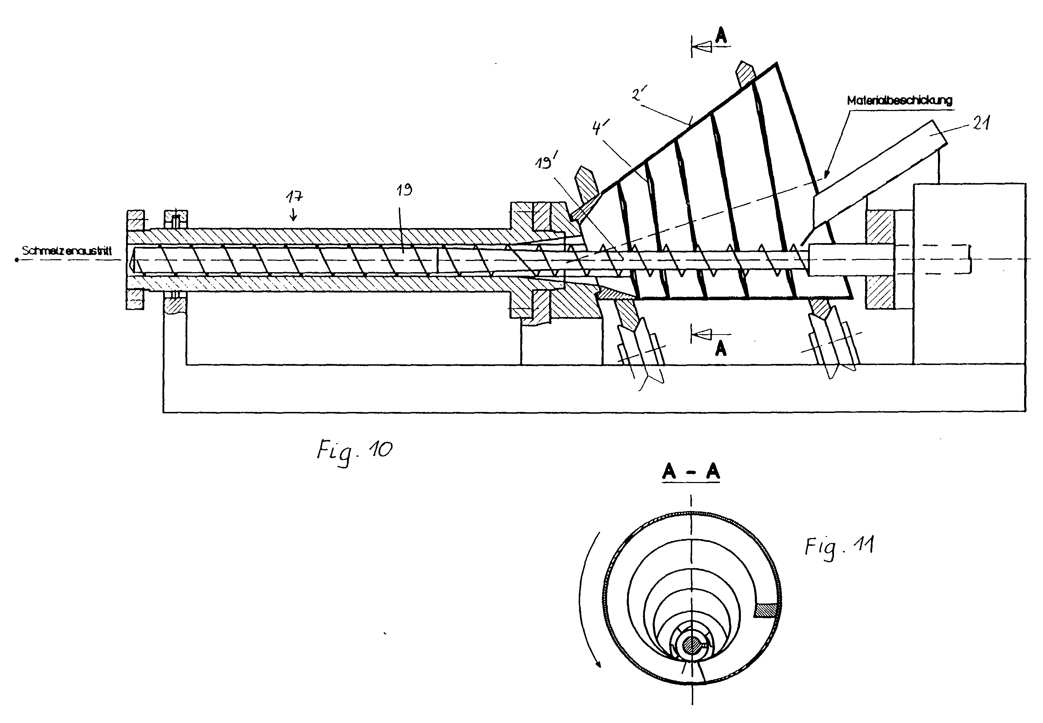

Die Erfindung wird nun an Hand von Ausführungsbeispielen und unter Bezugnahme auf die beiliegenden Zeichnungen näher erläutert. Dabei zeigen Fig.1 eine erste Ausführungsform der Vorrichtung zur Aufbereitung von Kunststoffgut im Längsschnitt, Fig.2 einen Querschnitt entlang Linie A - A von Fig.1, Fig.3a ein vergrößertes Detail B aus Fig.1, Figuren 3b und 3c Querschnittsansichten von zwei Varianten des der erfindungsgemäßen Vorrichtung nachgeschalteten Extruders gemäß Linie C - C in Fig.1, Fig.4 eine zweite Ausführungsform der Erfindung im Längsschnitt, die Figuren 5 und 6 Querschnittsansichten entlang der Linien A - A bzw. B - B von Fig.4, Fig.7 eine dritte Ausführungsform der Erfindung im Längsschnitt, die Figuren 8 und 9 Querschnittsansichten entlang der Linien A - A bzw. B - B von Fig.4, Fig.10 eine vierte Ausführungsform der Erfindung im Längsschnitt und Fig.11 einen Querschnitt entlang Linie A - A von Fig.10.

Zuerst auf Fig.1 Bezug nehmend, ist darin eine erste Ausführungsform der erfindungsgemäßen Vorrichtung zur Aufbereitung von Kunststoffgut dargestellt. Die Vorrichtung besteht aus einem allgemein mit 1 bezeichneten Aufnahmebehälter mit einem kegelstumpfförmigen, drehbaren Behälterteil 2, der durch Lager 14 mehrfach in einem Montagerahmen 11 drehbar gelagert ist, einer Beschickungsöffnung 3 für aufzubereitendes Kunststoffgut, sowie einem feststehenden Behälterteil 5, der an den drehbaren Behälterteil 2 angrenzt und eine Austragsöffnung 6 begrenzt. An der Innenwand des drehbaren Behälterteils 2 ist eine Schneckenwendel 4 angeordnet, wodurch der als hohler Schneckenkörper fungierende Behälterteil 2 gemeinsam mit der Schneckenwendel 4 eine äußere Stopfschnecke bildet. Diese Schnecke wird von einem Antrieb 13 in Richtung des Pfeils 10 angetrieben, wodurch im Behälter befindliches Kunststoffgut in Richtung zur Austragsöffnung 6 gefördert wird. Die äußere Schnecke umgibt eine innere Schnecke, bestehend aus einem zylindrischen Schneckenkörper 7 mit darauf angebrachter Schneckenwendel 8, die durch einen Antrieb 12 in Pfeilrichtung 9 gedreht wird und somit Kunststoffgut in Richtung zur Austragsöffnung 6 fördert. Die Drehachsen der äußeren und der inneren Schnecke fallen zusammen. Die Funktionsweise der Vorrichtung ist so, daß durch die Beschickungsöffnung eingebrachtes Material, das aus verschiedensten Kunststoffabfällen bestehen kann, durch die beiden Schnecken zur Austragsöffnung befördert wird, wobei durch den sich stetig verringernden Freiraum zwischen den Schnecken eine beträchtliche Verdichtung des Kunststoffgutes mit einhergehender Agglomerierung aufgrund der entstehenden Wärme erzielt wird. Die kegelstumpfförmige Behältergestaltung erweist sich dabei als vorteilhaft, da sie im Beschickungsbereich ein sehr großes Volumen für die meist sehr locker gepackten Kunststoffabfälle bietet, das sich mit zunehmender Verdichtung stetig verringert. Das vorverdichtete Kunststoffgut gelangt schließlich in den feststehenden Behälterteil 5 mit der Austragsöffnung 6. In diese Austragsöffnung ragt die innere Stopfschnecke 7,8. Um die Stopfwirkung in der Austragsöffnung zu verbessern und um zu verhindern, daß sich das darin befindliche Material gemeinsam mit der Schnecke dreht, ist der feststehende Behälterteil 5 als Nutbuchse ausgeführt, wie am besten in der Schnittdarstellung von Fig.2 zu sehen. Die Innenwand des Behälterteils 5 weist dabei gewundene Stege 16 auf, zwischen denen Nuten 15 definiert sind. Die Stege können einen konischen Verlauf aufweisen. Durch die Nuten wird eine schiebende Wirkung auf das Material erzielt und ein im Kreis drehen desselben verhindert.

Mit der Austragsöffnung 6 ist der Einzugsbereich eines nachgeschalteten Extruders 17 verbunden, der aus einem hohlzylindrischen Gehäuse 18 und darin drehbar gelagerter Extruderschnecke 19 besteht. Die Verbindung zwischen der erfindungsgemäßen Vorrichtung und dem Extruder ist besonders gut in den Figuren 2 und 3a zu erkennen, aus denen ersichtlich ist, daß die Extruderschnecke 19 im rechten Winkel zur Stopfschnecke 7,8 verläuft und die Stopfschnecke knapp darüber endet. In Fig.2 bezeichnet wieder Pfeil 9 die Drehrichtung der Schnecke 7,8. Um bereits im Einzugsbereich eine weitere Verdichtung bzw. Plastifizierung des zugeführten Kunststoffguts zu erzielen, ist der Extruder mit einer konischen Nutbuchse 20 am Einzug versehen. Außerdem ist die Extruderschnecke 19 kernprogressiv ausgebildet, d.h. der Kerndurchmesser vergrößert sich allmählich ausgehend vom Einzugsbereich.

Beim Extruder 17 kann es sich um einen Extruder mit einer einzelnen Schnecke 19 handeln, wie in Fig.3b dargestellt, die einen Querschnitt entlang Linie C - C in Fig.1 zeigt, wobei die Schnecke konisch gestaltet sein kann, oder alternativ dazu - wie in Fig.3c ebenfalls im Querschnitt entlang Linie C - C in Fig.1 dargestellt - um einen Doppelextruder 17 mit zwei Schnecken 19. Die Drehrichtung der beiden Schnecken kann entweder gegensinnig sein, wie durch die zwei dicken Pfeile im Schneckenkörper gezeigt, oder aber gleichsinnig, um bei bestimmten Kunststoffen eine bessere Durchmischung bzw. Knetung zu erzielen. Der letztere Fall wird durch die dünnen Pfeile unterhalb des Extruders symbolisiert.

In den Figuren 4, 5 und 6 ist eine zweite Ausführungsform der Erfindung dargestellt. Im Unterschied zur ersten Ausführung ist dabei die erfindungsgemäße Kunststoffaufbereitungsvorrichtung koaxial mit dem nachgeschalteten Extruder 17 verbunden, wobei die innere Stopfschnecke der Vorrichtung einstückig mit der Extruderschnecke 19 ausgebildet ist, nämlich als Abschnitt 19' dieser Extruderschnecke. Diese Ausführungsform bietet den Vorteil eines einfacheren Aufbaus sowie den Entfall eines eigenen Antriebsaggregats für die innere Stopfschnecke. Der Behälter ist im wesentlichen waagrecht angeordnet, was die erfindungsgemäße Vorrichtung vom bekannten Stand der Technik unterscheidet. Die übrigen Teile der erfindungsgemäßen Vorrichtung sind baugleich oder ähnlich mit der ersten Ausführungsform und werden daher mit gleichen Bezugszeichen versehen. Auf eine nochmalige Beschreibung dieser Teile kann verzichtet werden; vielmehr wird auf die obige ausführliche Beschreibung verwiesen. Beachtenswert bei dieser Variante der Erfindung ist weiters, daß die innere Stopfschnecke 19' nicht ganz bis an ihr stromaufwärtiges Ende geschnitten ist, sondern dort in einen zylindrischen Schaft übergeht. Dadurch ragt die äußere Schnecke 4 nach hinten über die innere Schnecke hinaus und transportiert zunächst das zugeführte Kunststoffgut allein in Richtung Austragsöffnung.

In den Figuren 7 bis 9 ist eine dritte Ausführungsform der Erfindung beschrieben, die der zweiten Ausführungsform ähnelt, mit den Unterschieden, daß die Beschickung am Zentrum der Basis des Behälters 2 erfolgt, daß die wiederum mit der Schnecke 19" des nachgeschalteten Extruders 17' einstückig ausgebildete innere Stopfschnecke 19' der Vorrichtung nur geringfügig von der äußeren Stopfschnecke überragt wird und daß der Extruder 17' mit einer mantelseitigen Schmelzenaustrittsöffnung versehen ist, was bedingt, daß die Extruderschnecke in ihrem Endbereich mit einer gegenläufigen Schneckenwendel versehen ist, die über den Austrittsbereich hinaus gelangendes Material wieder zurückführt. Da das komprimierte Kunststoffgut im Extruder eine gewisse Schmierwirkung ausübt, ist es speziell bei dieser Ausführungsform wichtig, daß der Extruder stets mit Kunststoffgut gefüllt ist, wozu die erfindungsgemäße Vorrichtung im Gegensatz zum Stand der Technik imstande ist. Allenfalls können auch mehrere Kunststoffaufbereitungsvorrichtungen gemäß der Erfindung mit einem Extruder kombiniert werden, um die ausreichende Materialzufuhr sicherzustellen. Die übrigen Teile dieser Ausführungsform sind im wesentlichen baugleich zu den obigen Ausführungsformen, weshalb auf eine wiederholende Beschreibung verzichtet werden kann.

Bei den bisher dargestellten Ausführungsformen der Erfindung war die äußere Stopfschnecke stets koaxial mit der inneren Stopfschnecke. In der in den Figuren 10 und 11 dargestellten Variante schließt die Drehachse des drehbaren Behälterteils 2', an dessen Innenwand sich die äußere Schneckenwendel 4' befindet, mit der Drehachse der inneren Stopfschnecke 19', die mit der Extruderschnecke 19 einstückig ausgebildet ist, einen spitzen Winkel ein, wobei die untere Erzeugende des Behälterteils 2' parallel zur Drehachse der Schnecke 19' verläuft. Auf diese Weise entsteht oberhalb der Schnecke 19' ein vergrößerter Beschickungsraum, was insbesondere bei Beschickung mit sehr locker gepacktem Material höhere Materialdurchsätze erlaubt. Die Beschickung erfolgt dabei über die Rutsche 21.

Die Erfindung wurde zwar unter Bezugnahme auf spezifische Ausführungsformen beschrieben, ist jedoch nicht darauf beschränkt, sondern ihr Schutzbereich wird ausschließlich durch die folgenden Patentansprüche bestimmt.

## Patentansprüche

1. Vorrichtung zur Aufbereitung von, insbesondere thermoplastischem, Kunststoffgut, bestehend aus einem Behälter mit einer Beschickungsöffnung zur Zuführung von Kunststoffgut und einer Austragsöffnung für aufbereitetes Kunststoffgut zum Anschluß an einen nachgeschalteten Extruder mit stirn- oder mantelseitiger Füllöffnung, wobei im Behälter (2) zumindest eine erste Schnecke (7,8;19') mit einem Kern (7) und darauf ausgebildeter Schneckenwendel (8) wenigstens teilweise innerhalb mindestens einer zweiten, hohlen Schnecke angeordnet ist, deren Schneckenwendel (4,4') an der Innenwand eines hohlen Schneckenkörpers (2,2') ausgebildet ist, und beide Schnecken solcherart drehbar antreibbar sind, daß sie Kunststoffgut zur Austragsöffnung (6) des Behälters fördern, dadurch gekennzeichnet, daß sich der Freiraum zwischen den beiden Schnecken zur Austragsöffnung des Behälters hin verringert.

2. Vorrichtung nach Anspruch 1, dadurch gekennzeichnet, daß die beiden Schnecken gleichsinnige Schneckengänge aufweisen und gleichsinnig drehbar sind.

3. Vorrichtung nach Anspruch 1, dadurch gekennzeichnet, daß die beiden Schnecken gegensinnige Schneckengänge aufweisen und gegensinnig drehbar sind.

4. Vorrichtung nach einem der Ansprüche 1 bis 3, dadurch gekennzeichnet, daß die Förderrichtungen der beiden Schnecken zwischen der Waagrechten und der nach unten weisenden Lotrechten liegen.

5. Vorrichtung nach einem der Ansprüche 1 bis 4, dadurch gekennzeichnet, daß die Drehachsen der beiden Schnecken (8,19';4) zusammenfallen.

6. Vorrichtung nach einem der Ansprüche 1 bis 4, dadurch gekennzeichnet, daß die Drehachsen der beiden Schnecken (19',4') miteinander einen spitzen Winkel bilden.

7. Vorrichtung nach einem der Ansprüche 1 bis 4, dadurch gekennzeichnet, daß die Drehachsen der beiden Schnecken parallel und im Abstand zueinander verlaufen.

8. Vorrichtung nach einem der Ansprüche 1 bis 7, dadurch gekennzeichnet, daß ein drehbarer Teil (2) des Behälters den Körper der äußeren Schnecke bildet, an dessen Innenwand die Schneckenwendel (4) ausgebildet ist.

9. Vorrichtung nach Anspruch 8, dadurch gekennzeichnet, daß zwischen dem drehbaren Behälterteil (2) und der Austragsöffnung (6) ein starrer Behälterteil (5) vorgesehen ist, an dessen Innenwand, vorzugsweise gewundene, Nuten (15) ausgebildet sind.

10. Vorrichtung nach Anspruch 9, dadurch gekennzeichnet, daß die Nuten (15) zur Austragsöffnung (6) hin konisch zusammenlaufen und bzw. oder sich die Nuttiefe zur Austragsöffnung hin verringert.

11. Vorrichtung nach einem der Ansprüche 1 bis 10, dadurch gekennzeichnet, daß die innere Schnecke (7,8;19') zur Austragsöffnung hin kernprogressiv verläuft bzw. sich ihre Gangtiefe verringert und bzw. oder sich ihre Steigung verringert.

12. Vorrichtung nach einem der Ansprüche 1 bis 11, dadurch gekennzeichnet, daß die Innenwand des Körpers der äußeren Schnecke zur Austragsöffnung hin konisch zusammenläuft.

13. Vorrichtung nach einem der Ansprüche 1 bis 12, dadurch gekennzeichnet, daß sich die Gangtiefe der äußeren Schnecke (4,4') im Verlauf von der Beschickungsöffnung (3) zur Austragsöffnung (6) verändert.

14. Vorrichtung nach Anspruch 13, dadurch gekennzeichnet, daß sich die Gangtiefe der äußeren Schnecke im Verlauf von der Beschickungsöffnung zur Austragsöffnung zunächst erhöht und anschließend wieder verringert.

15. Vorrichtung nach einem der Ansprüche 1 bis 14, dadurch gekennzeichnet, daß die Drehgeschwindigkeit der äußeren und bzw. oder der inneren Schnecke in Abhängigkeit der Stromaufnahme des Motors einer nachgeschalteten Extruderschnecke regelbar ist, wobei eine erhöhte Stromaufnahme eine Verringerung der Drehgeschwindigkeit und vice versa zur Folge hat.

16. Vorrichtung nach einem der Ansprüche 1 bis 14, dadurch gekennzeichnet, daß die Drehgeschwindigkeit der äußeren und bzw. oder der inneren Schnecke in Abhängigkeit der Stromaufnahme ihres jeweiligen Antriebsmotors regelbar ist, wobei eine erhöhte Stromaufnahme eine Verringerung der Drehgeschwindigkeit und vice versa zur Folge hat.

17. Vorrichtung nach einem der Ansprüche 1 bis 14, dadurch gekennzeichnet, daß die Kunststoffgutzufuhrrate zur Beschickungsöffnung der Vorrichtung in Abhängigkeit der Stromaufnahme des Antriebsmotors der äußeren und bzw. oder der inneren Schnecke und bzw. oder einer nachgeschalteten Extruderschnecke regelbar ist, wobei eine erhöhte Stromaufnahme eine Verringerung der Zufuhrrate und vice versa zur Folge hat.

18. Vorrichtung nach einem der Ansprüche 1 bis 17, dadurch gekennzeichnet, daß die innere Schnecke (19') koaxial mit der Schnecke (19,19") eines nachgeschalteten Extruders (17,17') gekoppelt ist.

19. Vorrichtung nach Anspruch 18, dadurch gekennzeichnet, daß die innere Schnecke (19') einstückig mit der Schnecke (19,19") eines nachgeschalteten Extruders ausgebildet ist.

20. Vorrichtung nach Anspruch 18 oder 19, dadurch gekennzeichnet, daß die kombinierte Anordnung aus innerer Schnecke und Extruderschnecke zur Düsenöffnung des Extruders hin kernprogressiv verläuft bzw. sich ihre Gangtiefe verringert und bzw. oder sich ihre Steigung verringert.

21. Vorrichtung nach einem der Ansprüche 1 bis 20, dadurch gekennzeichnet, daß ein der Vorrichtung nachgeschalteter Extruder im Einzugsbereich eine mit Nuten versehene Buchse (20) aufweist.

22. Vorrichtung nach Anspruch 21, dadurch gekennzeichnet, daß die Nuten in Förderrichtung konisch zusammenlaufen und bzw. oder sich ihre Tiefe verringert.

23. Anlage, bestehend aus einer Vorrichtung zur Aufbereitung von, insbesondere thermoplastischem, Kunststoffgut nach einem der Ansprüche 1 bis 22, die mit einem Doppelschneckenextruder mit gleichsinnig oder gegensinnig drehenden Extruderschnecken zusammengeschaltet ist.

24. Anlage, bestehend aus mindestens zwei Vorrichtungen zur Aufbereitung von, insbesondere thermoplastischem, Kunststoffgut nach einem der Ansprüche 1 bis 17, 21 und 22, die mit einem Extruder zusammengeschaltet sind, wobei die Vorrichtungen zur Aufbereitung von Kunststoffgut im Einzugsbereich des Extruders um einen Teil des Schneckenumfangs angeordnet sind.

25. Anlage, bestehend aus mindestens zwei Vorrichtungen zur Aufbereitung von, insbesondere thermoplastischem, Kunststoffgut nach einem der Ansprüche 1 bis 17, 21 und 22, die mit einem Extruder zusammengeschaltet sind, wobei die Vorrichtungen zur Aufbereitung von Kunststoffgut hintereinander in Förderrichtung der Extruderschnecke angeordnet sind.

## Claims

1. An apparatus for recycling plastic material, particularly thermoplastic material, comprising a drum having a feeding aperture for supplying plastic material and a discharging aperture for recycled plastic material to be connected to an extruder disposed downstream and having a feeding aperture in its face or jacket wall, at least a first screw (7, 8; 19') having a core (7) and a screw helix (8) formed thereon being arranged within the drum (2) at least partly within at least a second, hollow screw, the screw helix (4, 4') of which is formed on the inner surface of a hollow screw body (2, 2'), and both screws being rotatably drivable such that they convey plastic material to the discharging aperture (6) of the drum, characterised in that the clearance between the two screws decreases in size towards the discharging aperture of the drum.

2. An apparatus according to claim 1, characterised in that the two screws have convolutions of the same sense and are rotatable in the same direction.

3. An apparatus according to claim 1, characterised in that the two screws have convolutions of the opposite sense and are rotatable in the opposite direction.

4. An apparatus according to any one of the claims 1 to 3, characterised in that the conveying directions of the two screws are between the horizontal line and the vertical line pointing downward.

5. An apparatus according to any one of the claims 1 to 4, characterised in that the rotation axes of the two screws (8, 19'; 4) coincide.

6. An apparatus according to any one of the claims 1 to 4, characterised in that the rotation axes of the two screws (19', 4') form an acute angle.

7. An apparatus according to any one of the claims 1 to 4, characterised in that the rotation axes of the two screws run parallel and are spaced from each other.

8. An apparatus according to any one of the claims 1 to 7, characterised in that a rotatable portion (2) of the drum forms the body of the outer screw, on the inner wall of which body the screw helix (4) is formed.

9. An apparatus according to claim 8, characterised in that between the rotatable drum portion (2) and the discharging aperture (6) there is provided a rigid drum portion (5), on the inner wall of which there are formed grooves (15), preferably winding grooves.

10. An apparatus according to claim 9, characterised in that the grooves (15) taper conically towards the discharging aperture (6) and/or the groove depth decreases towards the discharging aperture.

11. An apparatus according to any one of the claims 1 to 10, characterised in that the core of the inner screw (7, 8; 19') increases progressively towards the discharging aperture and/or its convolution depth and/or pitch is/are reduced.

12. An apparatus according to any one of the claims 1 to 11, characterised in that the inner wall of the body of the outer screw tapers conically towards the discharging aperture.

13. An apparatus according to any one of the claims 1 to 12, characterised in that the convolution depth of the outer screw (4, 4') varies from the feeding aperture (3) to the discharging aperture (6).

14. An apparatus according to claim 13, characterised in that the convolution depth of the outer screw initially increases, and is subsequently reduced, from the feeding aperture to the discharging aperture.

15. An apparatus according to any one of the claims 1 to 14, characterised in that the rotating speed of the outer and/or inner screw(s) can be controlled depending on the electric current consumption of the motor of a downstream extruder screw, an elevated current consumption resulting in a lower rotating speed and vice versa.

16. An apparatus according to any one of the claims 1 to 14, characterised in that the rotating speed of the outer and/or inner screw(s) can be controlled depending on the electric current consumption of the respective driving motor, an elevated current consumption resulting in a lower rotating speed and vice versa.

17. An apparatus according to any one of the claims 1 to 14, characterised in that the supply rate of plastic material towards the feeding aperture of the apparatus can be controlled depending on the electric current consumption of the driving motor of the outer and/or inner screw(s) and/or a downstream extruder screw, an elevated current consumption resulting in a decrease in the supply rate and vice versa.

18. An apparatus according to any one of the claims 1 to 17, characterised in that the inner screw (19') is coaxially coupled with the screw (19, 19") of a downstream extruder (17, 17').

19. An apparatus according to claim 18, characterised in that the inner screw (19') is formed integrally with the screw (19, 19") of a downstream extruder.

20. An apparatus according to claim 18 or 19, characterised in that the combined arrangement consisting of the inner screw and the extruder screw has a core which increases progressively towards the die opening of the extruder and/or has a decreasing convolution depth and/or pitch.

21. An apparatus according to any one of the claims 1 to 20, characterised in that an extruder disposed downstream of the apparatus has a bushing (20) provided with grooves in the intake area.

22. An apparatus according to claim 21, characterised in that the grooves taper conically in the conveying direction and/or decrease in depth.

23. An installation, comprising an apparatus for recycling plastic material, particularly thermoplastic material, according to any one of the claims 1 to 22, which is interconnected with a double-screw extruder having extruder screws rotating in the same or opposite sense.

24. An installation, comprising at least two apparatuses for recycling plastic material, particularly thermoplastic material, according to any one of the claims 1 to 17, 21 and 22, which are interconnected with an extruder and are arranged in the intake area of the extruder around a part of the extruder screw circumference.

25. An installation, comprising at least two apparatuses for recycling plastic material, particularly thermoplastic material, according to any one of the claims 1 to 17, 21 and 22, which are interconnected with an extruder and are arranged one behind the other in the conveying direction of the extruder screw.

## Revendications

1. Appareillage pour le traitement de matière plastique, en particulier thermoplastique, comprenant un récipient avec une ouverture de chargement pour l'alimentation de matière plastique et une ouverture d'extraction pour la matière plastique traitée à raccorder à une extrudeuse en aval avec ouverture de remplissage dans son côté frontal ou latéral, au moins une première vis (7, 8; 19') avec un noyau (7) sur lequel une hélice (8) est formée, étant arrangée dans le récipient (2) au moins partiellement à l'intérieur d'au moins une deuxième vis creuse, dont l'hélice (4, 4') est formée au côté intérieur d'un corps de vis creux (2, 2'), et tous les deux vis étant soumises à un mouvement rotatif de façon à transporter de la matière plastique à l'ouverture d'extraction (6) du récipient, caractérisé en ce que l'espace libre entre les deux vis se réduit vers l'ouverture d'extraction du récipient.

2. L'appareillage selon la revendication 1, caractérisé en ce que les deux vis ont des spires de vis au même sens et peuvent être tournées au même sens.

3. L'appareillage selon la revendication 1, caractérisé en ce que les deux vis ont des spires de vis en sens inverse et peuvent être tournées en sens inverse.

4. L'appareillage selon l'une des revendications 1 à 3, caractérisé en ce que les directions d'extraction des deux vis sont celles entre l'horizontale et la verticale dirigée vers le bas.

5. L'appareillage selon l'une des revendications 1 à 4 caractérisé en ce que les axes de rotation des deux vis (8, 19'; 4) coïncident.

6. L'appareillage selon l'une des revendications 1 à 4, caractérisé en ce que les axes de rotation des deux vis (19', 4') forment un angle de pointe.

7. L'appareillage selon l'une des revendications 1 à 4, caractérisé en ce que les axes de rotation des deux vis se trouvent en parallèle avec un écartement de l'un à l'autre.

8. L'appareillage selon l'une des revendications 1 à 7, caractérisé en ce qu'une partie rotative (2) du récipient forme le corps de la vis extérieure, au côté intérieur duquel l'hélice (4) est formée.

9. L'appareillage selon la revendication 8, caractérisé en ce qu'une partie de récipient rigide (5) est prévue entre la partie rotative (2) du récipient et l'ouverture d'extraction (6), au côté intérieur de laquelle des rainures (15), préférablement en spirale, sont formées.

10. L'appareillage selon la revendication 9, caractérisé en ce que les rainures (15) se réduisent coniquement vers l'ouverture d'extraction (6) et/ou en ce que la profondeur des rainures se réduit vers l'ouverture d'extraction.

11. L'appareillage selon l'une des revendications 1 à 10, caractérisé en ce que le noyau de la vis intérieure (7, 8; 19') s'accroît progressivement vers l'ouverture d'extraction et/ou en ce que la profondeur de sa spire se réduit et/ou en ce que son pas se réduit.

12. L'appareillage selon l'une des revendications 1 à 11, caractérisé en ce que le côté intérieur du corps de la vis extérieure se réduit coniquement vers l'ouverture d'extraction.

13. L'appareillage selon l'une des revendications 1 à 12, caractérisé en ce que la profondeur de la spire de la vis extérieure (4, 4') change en allant de l'ouverture de chargement (3) à l'ouverture d'extraction (6).

14. L'appareillage selon la revendication 13, caractérisé en ce que la profondeur de la spire de la vis extérieure, en allant de l'ouverture de chargement à l'ouverture d'extraction, s'accroît et se réduit par la suite.

15. L'appareillage selon l'une des revendications 1 bis 14, caractérisé en ce que la vitesse de rotation de la vis extérieure et/ou de la vis intérieure est réglable en fonction de la consommation de courant du moteur d'une vis d'extrudeuse placée en aval, une consommation de courant élevée ayant pour conséquence une réduction de la vitesse de rotation et vice versa.

16. L'appareillage selon l'une des revendications 1 à 14, caractérisé en ce que la vitesse de rotation de la vis extérieure et/ou de la vis intérieure est réglable en fonction de la consommation de courant de leur moteur de commande respectif, une consommation de courant élevée ayant pour conséquence une réduction de la vitesse de rotation et vice versa.

17. L'appareillage selon l'une des revendications 1 à 14, caractérisé en ce que le taux d'alimentation de matière plastique à l'ouverture de chargement de l'appareillage est réglable en fonction de la consommation de courant du moteur de commande de la vis extérieure et/ou de la vis intérieure et/ou d'une vis d'extrudeuse placée en aval, une consommation de courant élevée ayant pour conséquence une réduction du taux d'alimentation et vice versa.

18. L'appareillage selon l'une des revendications 1 à 17, caractérisé en ce la vis intérieure (19') est couplée coaxialement avec la vis (19, 19") d'une extrudeuse (17, 17') placée en aval.

19. L'appareillage selon la revendication 18, caractérisé en ce que la vis intérieure (19') est formée en une pièce avec la vis (19,19") d'une extrudeuse placée en aval.

20. L'appareillage selon l'une des revendications 18 et 19, caractérisé en ce que l'assemblage combiné de vis intérieure et vis d'extrudeuse a un noyau qui s'accroît progressivement vers l'orifice de filière de l'extrudeuse et/ou en ce que la profondeur de sa spire se réduit et/ou en ce que son pas se réduit.

21. L'appareillage selon l'une des revendications 1 à 20, caractérisé en ce qu'une extrudeuse placée en aval de l'appareillage a une douille (20) pourvue de rainures dans la région d'alimentation.

22. L'appareillage selon la revendication 21, caractérisé en ce que les rainures se réduisent coniquement dans la direction d'extraction et/ou en ce que leur profondeur se réduit.

23. Installation, comprenant un appareillage pour le traitement de matière plastique, en particulier thermoplastique, selon l'une des revendications 1 à 22, appareillage qui est interconnecté avec une extrudeuse à deux vis avec des vis d'extrudeuse tournant au même sens ou en sens inverse.

24. Installation, comprenant au moins deux appareillages pour le traitement de matière plastique, en particulier thermoplastique, selon l'une des revendications 1 à 17, 21 et 22, qui sont interconnectés avec une extrudeuse, les appareillages pour le traitement de matière plastique étant arrangés dans la région d'alimentation de l'extrudeuse autour d'une partie de la périphérie de la vis.

25. Installation, comprenant au moins deux appareillages pour le traitement de matière plastique, en particulier thermoplastique, selon l'une des revendications 1 à 17, 21 et 22, qui sont interconnectés avec une extrudeuse, les appareillages pour le traitement de matière plastique étant arrangés consécutivement dans la direction d'alimentation de la vis d'extrudeuse.
